# EUROPEAN PATENT SPECIFICATION

(11) **EP 4 038 913 B1**
(45) Date of publication and mention of the grant of the patent: **09.04.2025**
(21) Application number: 19783275.1
(22) Date of filing: 02.10.2019
(51) Int. Cl.: H04W 4/20, H04W 8/24, H04W 24/02, H04W 24/10, H04W 4/50

(54) **PROVIDING PRODUCER NODE MACHINE LEARNING BASED ASSISTANCE**
BEREITSTELLUNG VON UNTERSTÜTZUNG FÜR EINEN PRODUCER-KNOTEN AUF DER BASIS VON MASCHINELLEM LERNEN
FOURNITURE D'AIDE DE NOEUD PRODUCTEUR BASÉE SUR L'APPRENTISSAGE MACHINE

(43) Date of publication of application: 10.08.2022
(73) Proprietor: Nokia Technologies Oy, 02610 Espoo (FI)
(72) Inventor: KOVÁCS, István, 9000 Aalborg (DK); MOILANEN, Jani, 00200 Helsinki (FI); ZIRWAS, Wolfgang, 81249 Munich (DE); HENTTONEN, Tero, 02760 Espoo (FI); VEIJALAINEN, Teemu, 00770 Helsinki (FI); UZEDA GARCIA, Luis, 91300 Massy (FR); BUTT, Muhammad Majid, 92160 Antony (FR); CENTENARO, Marco, 9000 Aalborg (DK); LÓPEZ, Melisa, 9000 Aalborg (DK)
(74) Representative: Mudge, Kevin
(86) International application number: PCT/EP2019/076747
(87) International publication number: WO 2021/063500

(56) References cited:
- US-A1- 2019 132 708
- FRAUNHOFER IIS ET AL: "DL positioning considerations: Pattern Learning, RSS fingerprinting and Beams", vol. RAN WG1, no. Taipei, Taiwan; 20190121 - 20190125, 20 January 2019 (2019-01-20), XP051594025, Retrieved from the Internet <URL:http://www.3gpp.org/ftp/Meetings%5F3GPP%5FSYNC/RAN1/Docs/R1%2D1901182%2Ezip> [retrieved on 20190120]

## Description

### TECHNICAL FIELD

The present application generally relates to the field of wireless communications. In particular, the present application relates to a consumer node and a producer node for wireless communication, and to related methods and computer programs.

### BACKGROUND

In wireless communications networks, machine learning algorithms can be executed by a consumer node and/or a producer node, for example at a radio access network (RAN) side, for example, at a network node or a base station, and at a user node side, for example, at a user equipment (UE). For example, the user equipment may have functionalities needed to provide machine learning based assistance to the RAN. These functionalities may consist of, for example, predictions (forecasts) of certain events such as a handover (HO), crossing reference symbol received power (RSRP) thresholds, quality of service (QoS) variations, mobility state change, etc. This forecast information then needs to be reported back to the serving gNB(s) to be used as input in radio resource management (RRM) algorithms and RRM actions.

In general, there is a need for a solution that would enable efficient configuration of the machine learning based assistance while at the same time keeping the signalling overhead at a low level between the consumer node and the producer node.

Document US 2019/132708 A1 discloses an expanded implementation of enhanced broadcast multicast services for broadcast multicast content selection and service.

### SUMMARY

There is provided an example embodiment of a method as detailed according to claim 1. Further, there is provided an example embodiment of a method as detailed according to claim 3. In addition, there is provided an example embodiment of a method according to claim 7. Moreover, there is provided an example embodiment of a method according to claim 9.

There is provided an example embodiment of a network node as detailed according to claim 11. Further, there is provided an example embodiment of a network node as detailed according to claim 12. In addition, there is provided an example embodiment of a user node according to claim 13. Moreover, there is provided an example embodiment of a user node according to claim 14.

An example embodiment of a computer program comprises instructions for causing an apparatus to perform the method of any of the above example embodiments.

Further advantageous developments are defined in the respective dependent claims 2, 4 to 6, 8 and 10.

### DESCRIPTION OF THE DRAWINGS

The accompanying drawings, which are included to provide a further understanding of the embodiments and constitute a part of this specification, illustrate embodiments and together with the description help to explain the principles of the embodiments. In the drawings:
**FIG. 1** illustrates an example embodiment of the subject matter described herein illustrating a consumer node.
**FIG. 2** illustrates an example embodiment of the subject matter described herein illustrating a producer node.
**FIG. 3A** illustrates an example embodiment of a structure of a producer node machine learning based assistance capability.
**FIG. 3B** illustrates an example embodiment of a machine learning functional architecture.
**FIG. 4A** illustrates an example embodiment of signaling where a consumer node activates a specific machine learning based functionality in a producer node.
**FIG. 4B** illustrates an example embodiment of signaling where the producer node requests activation of a machine learning based functionality.
**FIG. 4C** illustrates an example embodiment of signaling where the producer node requests deactivation of a currently used machine learning based functionality.
**FIG. 4D** illustrates an example embodiment of signaling where the consumer node requests deactivation of a currently used machine learning based functionality in the producer node.

### DETAILED DESCRIPTION

Reference will now be made in detail to embodiments, examples of which are illustrated in the accompanying drawings. The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

As discussed herein, the term "producer node machine learning based assistance", "user node machine learning based assistance" or "machine learning based assistance" is used widely to refer to functionalities at the producer node, for example, a user node or any other network node, to provide machine learning (ML) based assistance associated with a network, for example, radio access network, cognitive radio and software defined radio solutions. Even if the example embodiments discussed herein may relate to a scenario in which the user node has the functionalities needed to provide ML-based assistance to the radio access network and where the functionalities may consist of, for example, predictions (forecasts) of certain events such as handover (HO), crossing reference symbol received power (RSRP) thresholds, quality of service variations, mobility state change, etc., these are only non-restrictive examples. Further, the employed ML algorithms providing/generating the user node machine learning based assistance information (for example, prediction of RSRP values, CSI, HO events) may have been optimized (trained and tested) under a comprehensive set of operating modes (input data) and may have the capability of delivering at least one of the typical ML/deep learning (DL)/artificial intelligence (AI) algorithm performance measures.

Further, as used herein, the labels "producer" and "consumer" may relate to machine learning prediction/inference.

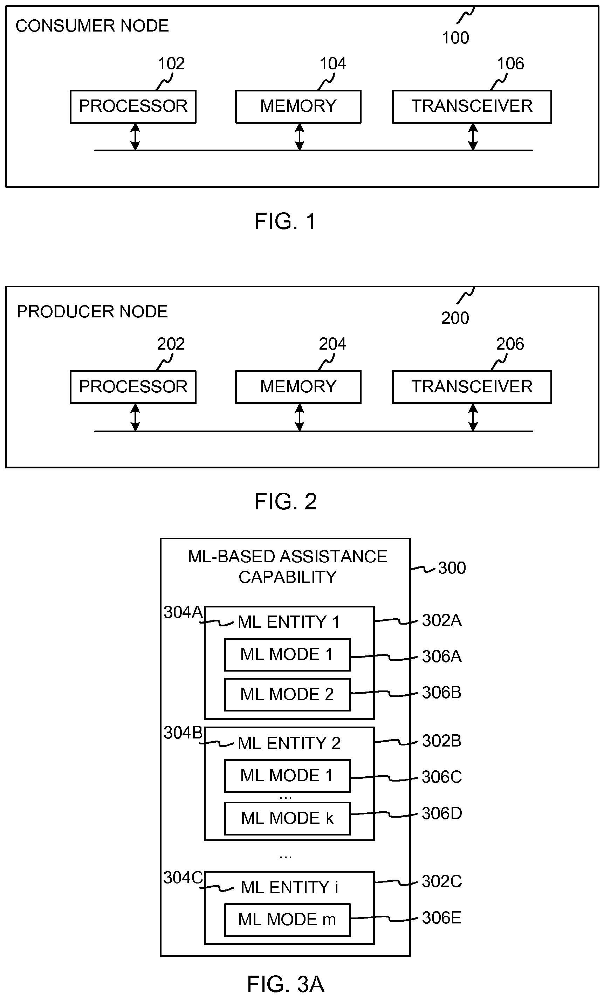

FIG. 1 illustrates an example embodiment of the subject matter described herein illustrating a consumer node 100.

The consumer node 100 comprises one or more processors 102, and one or more memories 104 that comprise computer program code. The consumer node 100 may also include a transceiver 106, as well as other elements, such as an input/output module (not shown in FIG. 1), and/or a communication interface (not shown in FIG. 1).

Although the consumer node 100 is depicted to include only one processor 102, the consumer node 100 may include more than one processor. In an example embodiment, the memory 104 is capable of storing instructions, such as an operating system and/or various applications.

Furthermore, the processor 102 is capable of executing the stored instructions. In an embodiment, the processor 102 may be embodied as a multi-core processor, a single core processor, or a combination of one or more multi-core processors and one or more single core processors. For example, the processor 102 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip (for example, a machine learning specific processor, for example, a tensor processing unit (TPU) etc.), or the like. In an embodiment, the processor 102 may be configured to execute hard-coded functionality. In an example embodiment, the processor 102 is embodied as an executor of software instructions, wherein the instructions may specifically configure the processor 102 to perform the algorithms and/or operations described herein when the instructions are executed.

The memory 104 may be embodied as one or more volatile memory devices, one or more non-volatile memory devices, and/or a combination of one or more volatile memory devices and non-volatile memory devices. For example, the memory 104 may be embodied as semiconductor memories (such as mask ROM, PROM (programmable ROM), EPROM (erasable PROM), flash ROM, RAM (random access memory), etc.).

The consumer node 100 may be, for example, a network node, a base station or any other network side node or apparatus providing wireless communication, for example, Long-Term Evolution (LTE) or 5G wireless communication.

The at least one memory 104 and the computer program code are configured to, with the at least one processor 102, cause the consumer node 100 to at least perform receiving, from a user node, user node capabilities comprising a machine learning based assistance capability, the machine learning based assistance capability comprising machine learning based functionalities, each machine learning based functionality comprising a machine learning entity and at least one machine learning mode associated with the machine learning entity.

Further, any combination of the illustrated components disclosed in FIG. 1, for example, at least one of the processor 102, the memory 104 and the transceiver 106 may constitute means for receiving, from a user node, user node capabilities comprising a machine learning based assistance capability, the machine learning based assistance capability comprising machine learning based functionalities, each machine learning based functionality comprising a machine learning entity and at least one machine learning mode associated with the machine learning entity.

FIG. 2 illustrates an example embodiment of the subject matter described herein illustrating a producer node 200.

The producer node 200 comprises one or more processors 202, and one or more memories 204 that comprise computer program code. The producer node 200 may also include a transceiver 206, as well as other elements, such as an input/output module (not shown in FIG. 2), and/or a communication interface (not shown in FIG. 2).

Although the producer node 200 is depicted to include only one processor 202, the producer node 200 may include more than one processor. In an example embodiment, the memory 204 is capable of storing instructions, such as an operating system and/or various applications.

Furthermore, the processor 202 is capable of executing the stored instructions. In an embodiment, the processor 202 may be embodied as a multi-core processor, a single core processor, or a combination of one or more multi-core processors and one or more single core processors. For example, the processor 202 may be embodied as one or more of various processing devices, such as a coprocessor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), a hardware accelerator, a special-purpose computer chip, or the like. In an embodiment, the processor 102 may be configured to execute hard-coded functionality. In an example embodiment, the processor 202 is embodied as an executor of software instructions, wherein the instructions may specifically configure the processor 202 to perform the algorithms and/or operations described herein when the instructions are executed.

The memory 204 may be embodied as one or more volatile memory devices, one or more non-volatile memory devices, and/or a combination of one or more volatile memory devices and non-volatile memory devices. For example, the memory 204 may be embodied as semiconductor memories (such as mask ROM, PROM (programmable ROM), EPROM (erasable PROM), flash ROM, RAM (random access memory), etc.).

The producer node 200 may be, for example, a user node or a user equipment or any other type of devices used by an end user and capable of communication in a wireless network. Such devices include but are not limited to smartphones, tablet computers, smart watches, laptop computers, Internet-of-Things (IoT) devices, hand-held or portable devices etc.

The at least one memory 204 and the computer program code are configured to, with the at least one processor 202, cause the producer node 200 to at least perform identifying user node capabilities comprising a machine learning based assistance capability, the machine learning based assistance capability comprising machine learning based functionalities, each machine learning based functionality comprising a machine learning entity and at least one machine learning mode associated with the machine learning entity; and causing transmission of the user node capabilities to a network node.

Further, any combination of the illustrated components disclosed in FIG. 2, for example, at least one of the processor 202, the memory 204 and the transceiver 206 may constitute means for identifying user node capabilities comprising a machine learning based assistance capability, the machine learning based assistance capability comprising machine learning based functionalities, each machine learning based functionality comprising a machine learning entity and at least one machine learning mode associated with the machine learning entity; and means for causing transmission of the user node capabilities to a network node.

FIG. 3A illustrates an example embodiment of a structure of a producer node machine learning based assistance capability 300. In an example embodiment, the producer node may be configured to provide machine learning based assistance to a consumer node and expose its machine learning based assistance capability to the consumer node by using the producer node machine learning based assistance capability 300. The producer node machine learning based assistance capability 300 may be stored in a memory 204 of the producer node.

The producer node machine learning based assistance capability 300 comprises machine learning based functionalities 302A, 302B, 302C. Each machine learning based functionality 302A, 302B, 302C comprises a machine learning entity 304A, 304B, 304C and at least one machine learning mode 306A, 306B, 306C, 306D, 306E associated with the machine learning entity 304A, 304B, 304C.

As an example, the machine learning entity 304A may be associated with handover (HO) prediction. Two machine-learning modes 306A, 306B have been associated with the machine learning entity 304A. The first machine-learning mode 306A may be associated with, for example, 10ms ahead HO prediction with 95% accuracy. The second machine-learning mode 306B may be a fallback operating mode which can be applied is case the first machine-learning mode 306A is not available. In this example, the second machine-learning mode 306B, i.e. the fallback operating mode, is associated with 200ms ahead HO predictions with 90% accuracy.

As an example, the machine learning entity 304B may be associated with quality of service (QoS) prediction. Two machine-learning modes 306C, 306D have been associated with the machine learning entity 304B. At least one machine learning mode 306C, 306D may be associated with the machine learning entity 304B. The machine-learning mode 306D may be a fallback operating mode which can be applied is case the machine-learning mode 306C is not available or cannot otherwise be used.

As another example, the producer node machine learning based assistance capability 300 may comprise also a machine learning based functionality 302A comprising a machine learning mode 306E associated only with one machine learning entity 302C.

Relating generally to fallback operating modes, at least one fallback operating mode may be configured to be used when none of the configured user node machine learning based primary modes can be used. This may happen, for example, when they are not available, no input available/deactivated, there are measurement or connectivity errors etc. The at least one fallback operating mode may comprise, for example, one of the following:
- A second producer node capability (machine learning based or not), different from the first machine learning based assistance capability.
- A specific machine learning based functionality which is part of the machine learning based assistance capability.
- A specific rule-based functionality which is part of the machine learning based assistance capability.
- A combination of the above.
- Different fallback operating modes can be specified and configured for each of the different machine learning based functionalities, for a group of machine learning modes or for a group of machine learning entities. There may also be machine learning based functionalities which do not require a fallback operating mode at all (or includes a "do nothing" fallback operating mode).

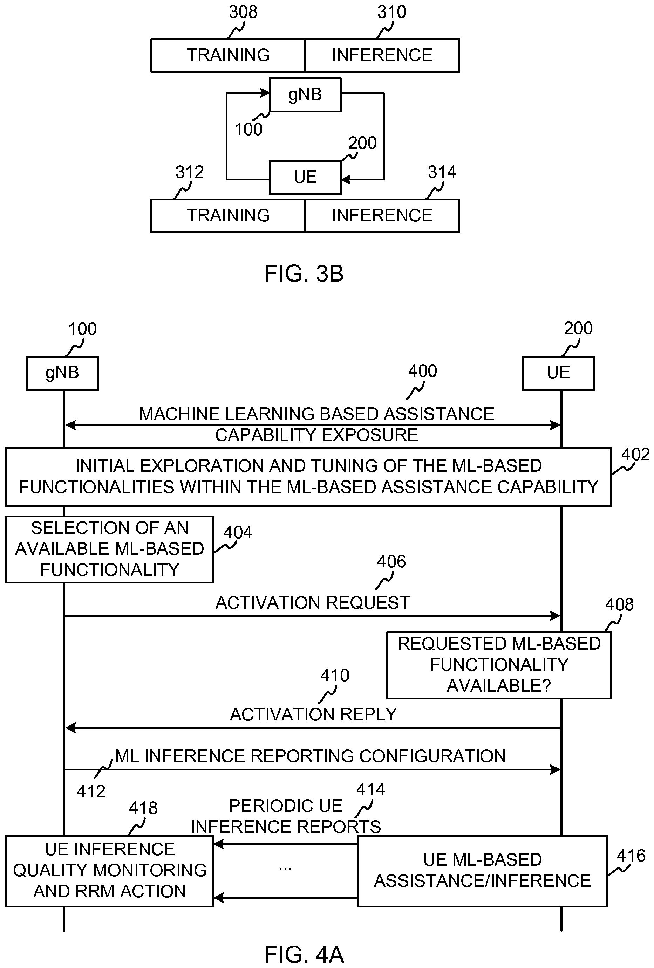

FIG. 3B illustrates an example embodiment of a machine learning functional architecture. FIG. 3B illustrates a simplified example where both the Radio Access Network (RAN), for example, a gNB 100 and a user equipment (UE) 200 have machine learning based functionalities, i.e. training 308, 312 and inference 310, 314. The training 308, 312 and inference 310, 314 functionalities are separated to illustrate that these can be generally decoupled and be active either in parallel or at different time instances. In this context, training may mean, for example, that the (hyper) parameters of the machine learning algorithm are being learned, tested and validated. Inference implies that data-driven predictions or decisions are taking place.

The control-feedback message loop illustrated in FIG. 3B comprises delivering configuration of the machine learning based functionality(ies) and reporting of inference results. In an example embodiment, this may be a generic and minimum set of information which needs to be exchanged between the gNB 100 and the UE 100. The configuration of the machine learning based functionality(ies) may comprise, for example, selection of the machine learning model and layers architecture, potentially initializing weights, (hyper) parameters, selecting activation functions etc.). The gNB 100 and UE 200 can both be a source and a target of such messages.

FIG. 4A illustrates an example embodiment of signaling where a consumer node 100 activates a specific machine learning based functionality in a producer node 200. The producer node 200 may be configured to provide machine learning based assistance to the consumer node 100. In this example embodiment, the consumer node 100 is a network node, for example, a gNB and the producer node 200 is a user node, for example, a user equipment. It is evident that in other environments the actual nodes may be different.

At 400 the user node 200 exposes its machine learning based assistance capability to the network node 100. The machine learning based assistance capability may comprise machine learning based functionalities where each machine learning based functionality comprises a machine learning entity and at least one machine learning mode associated with the machine learning entity. The machine learning based functionalities, machine learning entities and machine learning modes have been discussed in more detail in relation to FIG. 3A.

At 402 an initial exploration and tuning of the machine learning based functionalities within the machine learning based assistance capability may be performed. In this phase some of the machine learning entities can be directly or indirectly provided by the network in the form of generic description, such as containerized implementation, etc. In an example embodiment, control signaling to perform this phase can be partly specific to the exact definition of the machine learning based assistance capability and machine learning based functionalities within the assistance capability.

At 404 the network node 100 may be configured to select an available machine learning based functionality. In the selecting, the network node 100 may make use of the knowledge about the machine learning based assistance capability information received from the user node 200.

At 406 the network node 100 may send an activation request to the user node 200 to activate one or more of the machine learning based functionalities among the machine learning based functionalities (machine learning entity - machine learning mode) received from the user node 200 according to is radio resource management (RRM) needs.

At 408 the user node 200 is configured to determine whether the requested machine learning based functionality is available.

At 410 the user node 200 is configured to transmit an activation reply to the network node 100. The user node 200 replies to the network node 100, for example, based on machine learning processing resources availability or radio measurement/conditions detection, indicating whether it is possible to make use of the requested machine learning based functionalities. If it is not possible to make use of the requested machine learning based functionalities, the user node 200 may indicate a cause for this in the activation reply 410. For example, the user node 200 may indicate an alternative preferred machine learning based functionality to be considered. As another example, the user node 200 may indicate that a fallback operating mode included in the machine learning based functionalities is to be used. As another example, the user node 200 may indicate that is does not have enough battery power to run the assistance algorithm. As another example, the user node 200 may indicate that is has detected a significant change in the channel radio conditions, i.e. the channel conditions have significantly changed from the trained model and the accuracy of the machine learning based assistance/inference is not within a target range.

If the user node 200 acknowledges the activation request in the activation reply, the network node 100 enables the corresponding (specific) inference reporting scheme. The network node 100 may also provide the user node 200 with additional configuration information in a machine learning inference reporting configuration message 412, for example, one or more of the following:
- Configuration of the reporting periodicity. In one example embodiment, the default value may be part of the machine learning entity and/or machine learning mode definitions.
- Configuration of the actual content of the report. In one example embodiment, this may be part of the machine learning entity and/or machine learning mode definitions.

At 414, the user node 200 may send periodic user node inference reports to the network node 100 in accordance with the requested or set machine learning based functionality 416. At 418 the network node 100 may continuously monitor the quality of the inference reports from each activated machine learning based functionality.

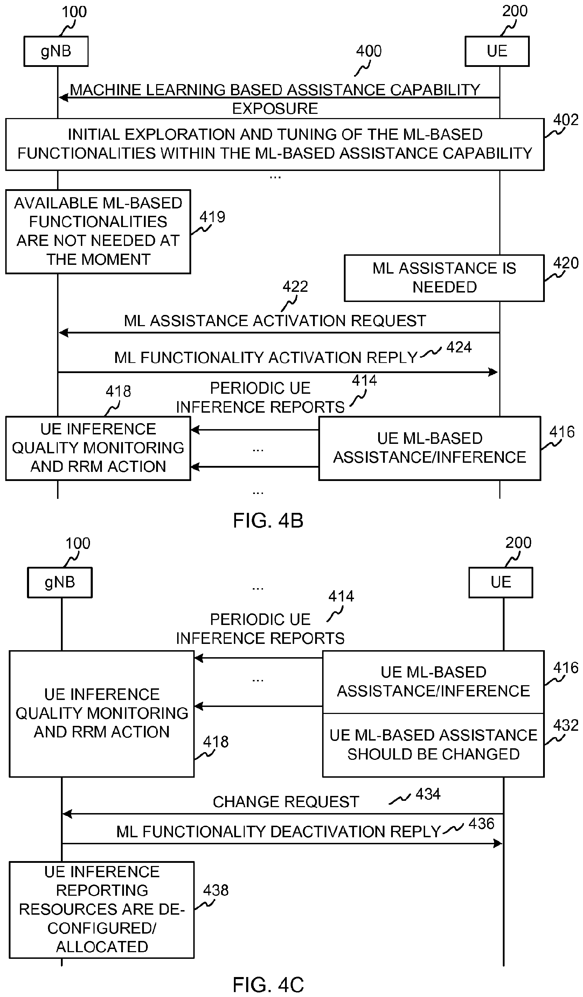

FIG. 4B illustrates an example embodiment of signaling where the producer node 200 requests activation of a machine learning based functionality. The producer node 200 may be configured to provide machine learning based assistance to the consumer node 100. In this example embodiment, the consumer node 100 is a network node, for example, a gNB and the producer node 200 is a user node, for example, a user equipment. It is evident that in other environments the actual nodes may be different.

At 400 the user node 200 exposes its machine learning based assistance capability to the network node 100. The machine learning based assistance capability may comprise machine learning based functionalities where each machine learning based functionality comprises a machine learning entity and at least one machine learning mode associated with the machine learning entity. The machine learning based functionalities, machine learning entities and machine learning modes have been discussed in more detail in relation to FIG. 3A.

At 402 an initial exploration and tuning of the machine learning based functionalities within the machine learning based assistance capability may be performed. In this phase some of the machine learning entities can be directly or indirectly provided by the network in the form of generic description, such as containerized implementation, etc. In an example embodiment, control signaling to perform this phase can be partly specific to the exact definition of the machine learning based assistance capability and machine learning based functionalities within the assistance capability.

A box 419 indicates that at a specific period of time, the network node 100 does not need the available machine learning based functionalities.

At 420 the user node detects that machine learning based assistance is needed.

At 422 the user node 200 is configured to send a machine learning based assistance activation request to the network node 100. The request may request activation of one or more of the machine learning based functionalities among the exposed machine learning based functionalities at 400. The machine learning based assistance activation request 422 may or may not comprise an explicit cause indication.

At 424 the network node 100 may be configured to send a machine learning based functionality activation reply to the user node 200. The reply acts as an acknowledgement for the activation request 422. It may also comprise inference reporting configuration information for the user node 200.

At 414, the user node 200 may send periodic user node inference reports to the network node 100 in accordance with the requested or set machine learning based functionality 416. At 418 the network node 100 may continuously monitor the quality of the inference reports from each activated machine learning based functionality.

FIG. 4C illustrates an example embodiment of signaling where the producer node 200 requests deactivation of a currently used machine learning based functionality. The producer node 200 may be configured to provide machine learning based assistance to the consumer node 100. In this example embodiment, the consumer node 100 is a network node, for example, a gNB and the producer node 200 is a user node, for example, a user equipment. It is evident that in other environments the actual nodes may be different.

At 414, the user node 200 may send periodic user node inference reports to the network node 100 in accordance with the requested or set machine learning based functionality 416. At 418 the network node 100 may continuously monitor the quality of the inference reports from each activated machine learning based functionality.

In case the user node detects that the machine learning based assistance should be changed at 432, the user node 200 may be configured to send a change request 434 to the network node to deactivate or switch the inference reporting. The change request 434 may also provide an indication about the cause of the deactivation. The indicated cause may comprise, for example, one of the following:
- "Stop-bat": Current machine learning based assistance cannot be run anymore due to low battery power.
- "Stop-comp": Current machine learning based assistance cannot be run anymore due to low computational power.
- "Stop-input: Current machine learning based assistance cannot be run anymore due to detected significant changes in input data (radio measurements).
- "Switch": Switch to another configured machine learning based assistance due to detected changes in the input data (radio measurements) or mobility state change.
- "Pause-X": Current machine learning based assistance cannot be run for a configured/indicated time period X.
- "Reset-alg": A reset/restart of the machine learning based algorithm is required due to the specifics of the algorithmic implementation.
- "Reset-err": Too many errors, for example, within a given time window or relative to a threshold, have been detected. A reset/restart of the ML-based algorithm is required.

The network node 100 may be configured to send, in response to the change request 434, a machine learning functionality deactivation reply 436 to the user node 200. The machine learning functionality deactivation reply 436 provides to the user node 200 a confirmation of the deactivated machine learning based assistance and reporting. In an example embodiment, the state of the deactivated inference reports may be valid for a given time period/window or until enabled again by the network node 100.

At 438 the network node de-configures/de-allocates the user node inference reporting resources.

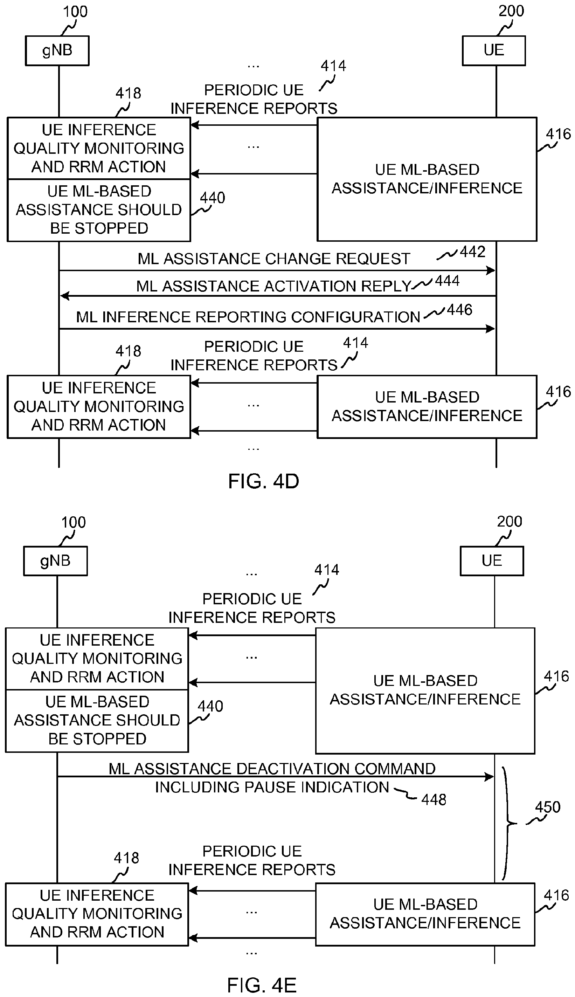

FIG. 4D illustrates an example embodiment of signaling where the consumer node 100 requests deactivation of a currently used machine learning based functionality in the producer node (UE). The producer node 200 may be configured to provide machine learning based assistance to the consumer node 100. In this example embodiment, the consumer node 100 is a network node, for example, a gNB and the producer node 200 is a user node, for example, a user equipment. It is evident that in other environments the actual nodes may be different.

At 414, the user node 200 may send periodic user node inference reports to the network node 100 in accordance with the requested or set machine learning based functionality 416. At 418 the network node 100 may continuously monitor the quality of the inference reports from each activated machine learning based functionality.

At 440 the network node 100 is configured to detect that the machine learning based assistance should be stopped. In an example embodiment, the machine learning assistance might not be needed (i.e. it can be stopped), for example, when:
- no processing power is available to utilise the inference reports
- high (uplink) load is detected, and there is no capacity for inference reports from the user node
- too many errors are detected (by any proprietary means)
- due to periodic disabling/enabling as part of a larger machine learning/artificial intelligence scheme.

At 442 the network node 100 is configured to send a machine learning assistance change request to the user node 200. The change request 442 requests the user node to deactivate or change the currently user machine learning based functionality or functionalities and corresponding inference reporting. The change request 442 may also indicate a cause for the deactivation, for example, one of the following:
- "Stop": Current machine learning based assistance is not needed anymore.
- "Switch to X": Switch to another configured machine learning based assistance X (new machine learning entity and/or new machine learning mode).
- "Pause: Current machine learning based assistance is not needed for a configured/indicated time period.
- "Reset": Too many errors within a given time window or relative to a threshold have been detected. A reset/restart of the machine learning based algorithm is required.

At 444 the user node 200 may be configured to send a machine learning assistance activation reply 446 to the network node 100. The reply may comprise, for example, an acknowledgement of the change request 442. In an example embodiment, the acknowledgement can be used by the network node 100 to reconfigure its own algorithms, disable reporting, etc. In case of negative acknowledgement (NACK) (for example, the user node 200 cannot disable the specified machine learning assistance mode because of some reason), the network node 100 might still decide to disable/deconfigure the associated reporting, but in the same time use the information in future signaling with the same user node 200 (for example, when there is no need to activate the specific machine learning assistance mode anymore).

In case of a "switch to X" or "reset" signal indicated at 442, at 446 the network node 100 may be configured to send a machine learning inference reporting configuration message to the user node 200. The configuration message may instruct the user node 200 to reconfigure its inference reporting to the network node 100. In response to the configuration message at 446, the user node 200 is configured to again start sending periodic user node inference reports to the network node 100 in accordance with the requested or set machine learning based functionality 416. At 418 the network node 100 may continuously monitor the quality of the inference reports from each activated machine learning based functionality.

FIG. 4E illustrates an example embodiment of signaling where the consumer node 100 deactivates with a pause command aa currently used machine learning based functionality in the producer node. The producer node 200 may be configured to provide machine learning based assistance to the consumer node 100. In this example embodiment, the consumer node 100 is a network node, for example, a gNB and the producer node 200 is a user node, for example, a user equipment. It is evident that in other environments the actual nodes may be different.

At 414, the user node 200 may send periodic user node inference reports to the network node 100 in accordance with the requested or set machine learning based functionality 416. At 418 the network node 100 may continuously monitor the quality of the inference reports from each activated machine learning based functionality.

At 440 the network node 100 is configured to detect that the machine learning based assistance should be stopped.

At 448 the network node 100 is configured to send a machine learning assistance change request comprising a pause indication to the user node 200. The pause indication may comprise a time period value 450 during which the current machine learning based assistance is not needed.

When the time period 450 has expired, the user node 200 may be configured to again start sending periodic user node inference reports to the network node 100 in accordance with the earlier requested or set machine learning based functionality 416. At 418 the network node 100 may continuously monitor the quality of the inference reports from each activated machine learning based functionality.

One or more of the illustrated example embodiments may enable a solution where combination of network node and user node inference is possible. Further, one or more of the illustrated example embodiments may enable a solution where part of the machine learning based control may be delegated to the user node. This may enable a better use of the available user node radio information. Further, user node quality monitoring of the inference results can be performed at both the user node and the network node, potentially with different time granularities and independent algorithms. Further, one or more of the illustrated example embodiments may enable a solution where the signaling load is reduced. The solution may enable a better use of the available user node machine learning capabilities without the need for explicit signaling for each machine learning based functionality configuration and/or change.

The example embodiments illustrated above may be performed by a user node, for example, a user equipment and/or a network node, for example, a base station. Further, a computer program comprising instructions for causing an apparatus to perform, may perform the illustrated example embodiments.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps of the methods described herein may be carried out in any suitable order, or simultaneously where appropriate. Additionally, individual blocks may be deleted from any of the methods without departing from the spirit and scope of the subject matter described herein. Aspects of any of the embodiments described above may be combined with aspects of any of the other embodiments described to form further embodiments without losing the effect sought.

The term 'comprising' is used herein to mean including the method, blocks or elements identified, but that such blocks or elements do not comprise an exclusive list and a method or apparatus may contain additional blocks or elements.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification, which is defined by the claims.

## Claims

1. A method comprising:
receiving at a radio access network, RAN, side at a network node (100), from a user node (200), user node capabilities comprising a machine learning based assistance capability (300), the machine learning based assistance capability (300) comprising machine learning based functionalities (302A, 302B, 302C), **characterized by** each machine learning based functionality (302A, 302B, 302C) comprising a machine learning entity (304A, 304B, 304C) and at least one machine learning mode (306A, 306B, 306C, 306D, 306E) associated with the machine learning entity (304A, 304B, 304C),
the method further comprising:
selecting at least one machine learning based functionality (302A, 302B, 302C) among the machine learning based functionalities (302A, 302B, 302C); and
causing transmission of an activation request to activate the selected at least one machine learning based functionality (302A, 302B, 302C) to the user node (200).

2. The method according to claim 1, further comprising:
receiving, from the user node (200), an activation request response, the activation request response comprising an indication whether the at least one machine learning based functionality (302A, 302B, 302C) is activated.

3. A method comprising:
receiving at a radio access network, RAN, side at a network node (100), from a user node (200), user node capabilities comprising a machine learning based assistance capability (300), the machine learning based assistance capability (300) comprising machine learning based functionalities (302A, 302B, 302C), **characterized by** each machine learning based functionality (302A, 302B, 302C) comprising a machine learning entity (304A, 304B, 304C) and at least one machine learning mode (306A, 306B, 306C, 306D, 306E) associated with the machine learning entity (304A, 304B, 304C),
the method further comprising:
receiving, from the user node (200), an activation request to activate at least one machine learning based functionality (302A, 302B, 302C) among the machine learning based functionalities (302A, 302B, 302C).

4. The method according to claim 3, further comprising:
causing transmission of a machine learning based functionality activation response to the user node (200).

5. The method according to any of claims 1 - 4, further comprising:
receiving, from the user node (200), a change request (434) to change at least one activated machine learning based functionality (302A, 302B, 302C) among the machine learning based functionalities (302A, 302B, 302C).

6. The method according to claim 5, wherein the change request (434) comprises a cause indication for the change, the cause indication comprising one of the following:
a deactivation indication to deactivate the machine learning based functionality (302A, 302B, 302C);
a switch indication to switch to another machine learning based functionality (302A, 302B, 302C);
a pause indication to pause the machine learning based functionality (302A, 302B, 302C) for a set time period; and
a reset indication to reset or restart the machine learning based functionality (302A, 302B, 302C).

7. A method comprising:
identifying, at a user node (200), user node capabilities comprising a machine learning based assistance capability (300), the machine learning based assistance capability (300) comprising machine learning based functionalities (302A, 302B, 302C), **characterized by** each machine learning based functionality (302A, 302B, 302C) comprising a machine learning entity (304A, 304B, 304C) and at least one machine learning mode (306A, 306B, 306C, 306D, 306E) associated with the machine learning entity (304A, 304B, 304C); and
causing transmission of the user node capabilities to a network node (100) at a radio access network, RAN, side,
the method further comprising:
receiving, from the network node (100), an activation request to activate at least one machine learning based functionality (302A, 302B, 302C) among the machine learning based functionalities (302A, 302B, 302C).

8. The method according to claim 7, further comprising:
causing transmission of an activation request response to the network node (100), the activation request response comprising an indication whether the at least one machine learning based functionality (302A, 302B, 302C) is activated.

9. A method comprising:
identifying, at a user node (200), user node capabilities comprising a machine learning based assistance capability (300), the machine learning based assistance capability (300) comprising machine learning based functionalities (302A, 302B, 302C), **characterized by** each machine learning based functionality (302A, 302B, 302C) comprising a machine learning entity (304A, 304B, 304C) and at least one machine learning mode (306A, 306B, 306C, 306D, 306E) associated with the machine learning entity (304A, 304B, 304C); and
causing transmission of the user node capabilities to a network node (100) at a radio access network, RAN, side,
the method further comprising:
causing transmission of an activation request to activate at least one machine learning based functionality (302A, 302B, 302C) among the machine learning based functionalities (302A, 302B, 302C) to the network node (100).

10. The method according to claim 9, further comprising receiving a machine learning based functionality activation response from the network node (100)

11. A network node (100) comprising means for performing:
the network node (100) at a radio access network, RAN, side,
receiving, from a user node (200), user node capabilities comprising a machine learning based assistance capability (300), the machine learning based assistance capability (300) comprising machine learning based functionalities (302A, 302B, 302C), **characterized by** each machine learning based functionality (302A, 302B, 302C) comprising a machine learning entity (304A, 304B, 304C) and at least one machine learning mode (306A, 306B, 306C, 306D, 306E) associated with the machine learning entity (304A, 304B, 304C),
selecting at least one machine learning based functionality (302A, 302B, 302C) among the machine learning based functionalities (302A, 302B, 302C); and
causing transmission of an activation request to activate the selected at least one machine learning based functionality (302A, 302B, 302C) to the user node (200).

12. A network node (100) comprising means for performing:
the network node (100) at a radio access network, RAN, side,
receiving, from a user node (200), user node capabilities comprising a machine learning based assistance capability (300), the machine learning based assistance capability (300) comprising machine learning based functionalities (302A, 302B, 302C), **characterized by** each machine learning based functionality (302A, 302B, 302C) comprising a machine learning entity (304A, 304B, 304C) and at least one machine learning mode (306A, 306B, 306C, 306D, 306E) associated with the machine learning entity (304A, 304B, 304C); and
receiving, from the user node (200), an activation request to activate at least one machine learning based functionality (302A, 302B, 302C) among the machine learning based functionalities (302A, 302B, 302C).

13. A user node (200) comprising means for performing:
identifying user node capabilities comprising a machine learning based assistance capability (300), the machine learning based assistance capability (300) comprising machine learning based functionalities (302A, 302B, 302C), **characterized by** each machine learning based functionality (302A, 302B, 302C) comprising a machine learning entity and at least one machine learning mode (306A, 306B, 306C, 306D, 306E) associated with the machine learning entity; and
causing transmission of the user node capabilities to a network node (100) at a radio access network, RAN, side; and
receiving, from the network node (100), an activation request to activate at least one machine learning based functionality (302A, 302B, 302C) among the machine learning based functionalities (302A, 302B, 302C).

14. A user node (200) comprising means for performing:
identifying user node capabilities comprising a machine learning based assistance capability (300), the machine learning based assistance capability (300) comprising machine learning based functionalities (302A, 302B, 302C), **characterized by** each machine learning based functionality (302A, 302B, 302C) comprising a machine learning entity and at least one machine learning mode (306A, 306B, 306C, 306D, 306E) associated with the machine learning entity;
causing transmission of the user node capabilities to a network node (100) at a radio access network, RAN, side; and
causing transmission of an activation request to activate at least one machine learning based functionality (302A, 302B, 302C) among the machine learning based functionalities (302A, 302B, 302C) to the network node (100).

15. A computer-readable medium comprising a computer program comprising instructions for causing an apparatus to perform the method of any of claims 1 - 10.

## Patentansprüche

1. Verfahren, das Folgendes umfasst:
Empfangen von Benutzerknotenfähigkeiten, die eine maschinenlernbasierte Assistenzfähigkeit (300) umfassen, auf einer Funkzugangsnetzwerk(RAN)-Seite an einem Netzwerkknoten (100) von einem Benutzerknoten (200), wobei die maschinenlernbasierte Assistenzfähigkeit (300) maschinenlernbasierte Funktionalitäten (302A, 302B, 302C) umfasst, **dadurch gekennzeichnet, dass** jede maschinenlernbasierte Funktionalität (302A, 302B, 302C) eine Maschinenlernentität (304A, 304B, 304C) und mindestens einen Maschinenlernmodus (306A, 306B, 306C, 306D, 306E), der mit der Maschinenlernentität (304A, 304B, 304C) verknüpft ist, umfasst,
wobei das Verfahren ferner Folgendes umfasst:
Auswählen von mindestens einer maschinenlernbasierten Funktionalität (302A, 302B, 302C) aus den maschinenlernbasierten Funktionalitäten (302A, 302B, 302C); und
Veranlassen einer Übertragung einer Aktivierungsanforderung, um die ausgewählte mindestens eine maschinenlernbasierte Funktionalität (302A, 302B, 302C) zu aktivieren, zum Benutzerknoten (200).

2. Verfahren nach Anspruch 1, das ferner Folgendes umfasst:
Empfangen einer Aktivierungsanforderungsantwort vom Benutzerknoten (200), wobei die Aktivierungsanforderungsantwort eine Anzeige dazu umfasst, ob die mindestens eine maschinenlernbasierte Funktionalität (302A, 302B, 302C) aktiviert ist.

3. Verfahren, das Folgendes umfasst:
Empfangen von Benutzerknotenfähigkeiten, die eine maschinenlernbasierte Assistenzfähigkeit (300) umfassen, auf einer Funkzugangsnetzwerk(RAN)-Seite an einem Netzwerkknoten (100) von einem Benutzerknoten (200), wobei die maschinenlernbasierte Assistenzfähigkeit (300) maschinenlernbasierte Funktionalitäten (302A, 302B, 302C) umfasst, **dadurch gekennzeichnet, dass** jede maschinenlernbasierte Funktionalität (302A, 302B, 302C) eine Maschinenlernentität (304A, 304B, 304C) und mindestens einen Maschinenlernmodus (306A, 306B, 306C, 306D, 306E), der mit der Maschinenlernentität (304A, 304B, 304C) verknüpft ist, umfasst,
wobei das Verfahren ferner Folgendes umfasst:
Empfangen einer Aktivierungsanforderung vom Benutzerknoten (200), um mindestens eine maschinenlernbasierte Funktionalität (302A, 302B, 302C) aus den maschinenlernbasierten Funktionalitäten (302A, 302B, 302C) zu aktivieren.

4. Verfahren nach Anspruch 3, das ferner Folgendes umfasst:
Veranlassen einer Übertragung einer maschinenlernbasierten Funktionalitätsaktivierungsantwort zum Benutzerknoten (200).

5. Verfahren nach einem der Ansprüche 1 bis 4, das ferner Folgendes umfasst:
Empfangen einer Änderungsanforderung (434) vom Benutzerknoten (200), um mindestens eine aktivierte maschinenlernbasierte Funktionalität (302A, 302B, 302C) aus den maschinenlernbasierten Funktionalitäten (302A, 302B, 302C) zu ändern.

6. Verfahren nach Anspruch 5, wobei die Änderungsanforderung (434) eine Veranlassungsanzeige für die Änderung umfasst, wobei die Veranlassungsanzeige eines von Folgendem umfasst:
eine Deaktivierungsanzeige zum Deaktivieren der maschinenlernbasierten Funktionalität (302A, 302B, 302C);
eine Umschaltanzeige zum Umschalten zu einer anderen maschinenlernbasierten Funktionalität (302A, 302B, 302C);
eine Unterbrechungsanzeige zum Unterbrechen der maschinenlernbasierten Funktionalität (302A, 302B, 302C) für eine eingestellte Zeitperiode; und
eine Rücksetzanzeige zum Zurücksetzen oder Neustarten der maschinenlernbasierten Funktionalität (302A, 302B, 302C).

7. Verfahren, das Folgendes umfasst:
Identifizieren von Benutzerknotenfähigkeiten, die eine maschinenlernbasierte Assistenzfähigkeit (300) umfassen, an einem Benutzerknoten (200), wobei die maschinenlernbasierte Assistenzfähigkeit (300) maschinenlernbasierte Funktionalitäten (302A, 302B, 302C) umfasst, **dadurch gekennzeichnet, dass** jede maschinenlernbasierte Funktionalität (302A, 302B, 302C) eine Maschinenlernentität (304A, 304B, 304C) und mindestens einen Maschinenlernmodus (306A, 306B, 306C, 306D, 306E), der mit der Maschinenlernentität (304A, 304B, 304C) verknüpft ist, umfasst; und
Veranlassen einer Übertragung der Benutzerknotenfähigkeiten zu einem Netzwerkknoten (100) auf einer Funkzugangsnetzwerk(RAN)-Seite,
wobei das Verfahren ferner Folgendes umfasst:
Empfangen einer Aktivierungsanforderung vom Netzwerkknoten (100), um mindestens eine maschinenlernbasierte Funktionalität (302A, 302B, 302C) aus den maschinenlernbasierten Funktionalitäten (302A, 302B, 302C) zu aktivieren.

8. Verfahren nach Anspruch 7, das ferner Folgendes umfasst:
Veranlassen einer Übertragung einer Aktivierungsanforderungsantwort zum Netzwerkknoten (100), wobei die Aktivierungsanforderungsantwort eine Anzeige dazu umfasst, ob die mindestens eine maschinenlernbasierte Funktionalität (302A, 302B, 302C) aktiviert ist.

9. Verfahren, das Folgendes umfasst:
Identifizieren von Benutzerknotenfähigkeiten, die eine maschinenlernbasierte Assistenzfähigkeit (300) umfassen, an einem Benutzerknoten (200), wobei die maschinenlernbasierte Assistenzfähigkeit (300) maschinenlernbasierte Funktionalitäten (302A, 302B, 302C) umfasst, **dadurch gekennzeichnet, dass** jede maschinenlernbasierte Funktionalität (302A, 302B, 302C) eine Maschinenlernentität (304A, 304B, 304C) und mindestens einen Maschinenlernmodus (306A, 306B, 306C, 306D, 306E), der mit der Maschinenlernentität (304A, 304B, 304C) verknüpft ist, umfasst; und
Veranlassen einer Übertragung der Benutzerknotenfähigkeiten zu einem Netzwerkknoten (100) auf einer Funkzugangsnetzwerk(RAN)-Seite,
wobei das Verfahren ferner Folgendes umfasst:
Veranlassen einer Übertragung einer Aktivierungsanforderung zum Netzwerkknoten (100), um mindestens eine maschinenlernbasierte Funktionalität (302A, 302B, 302C) aus den maschinenlernbasierten Funktionalitäten (302A, 302B, 302C) zu aktivieren.

10. Verfahren nach Anspruch 9, das ferner das Empfangen einer maschinenlernbasierten Funktionalitätsaktivierungsantwort vom Netzwerkknoten (100) umfasst

11. Netzwerkknoten (100), der Mittel zum Durchführen von Folgendem umfasst:
am Netzwerkknoten (100) auf einer Funkzugangsnetzwerk (RAN) -Seite,
Empfangen von Benutzerknotenfähigkeiten, die eine maschinenlernbasierte Assistenzfähigkeit (300) umfassen, von einem Benutzerknoten (200), wobei die maschinenlernbasierte Assistenzfähigkeit (300) maschinenlernbasierte Funktionalitäten (302A, 302B, 302C) umfasst, **dadurch gekennzeichnet, dass** jede maschinenlernbasierte Funktionalität (302A, 302B, 302C) eine Maschinenlernentität (304A, 304B, 304C) und mindestens einen Maschinenlernmodus (306A, 306B, 306C, 306D, 306E), der mit der Maschinenlernentität (304A, 304B, 304C) verknüpft ist, umfasst,
Auswählen von mindestens einer maschinenlernbasierten Funktionalität (302A, 302B, 302C) aus den maschinenlernbasierten Funktionalitäten (302A, 302B, 302C); und
Veranlassen einer Übertragung einer Aktivierungsanforderung, um die ausgewählte mindestens eine maschinenlernbasierte Funktionalität (302A, 302B, 302C) zu aktivieren, zum Benutzerknoten (200).

12. Netzwerkknoten (100), der Mittel zum Durchführen von Folgendem umfasst:
am Netzwerkknoten (100) auf einer Funkzugangsnetzwerk (RAN) -Seite,
Empfangen von Benutzerknotenfähigkeiten, die eine maschinenlernbasierte Assistenzfähigkeit (300) umfassen, von einem Benutzerknoten (200), wobei die maschinenlernbasierte Assistenzfähigkeit (300) maschinenlernbasierte Funktionalitäten (302A, 302B, 302C) umfasst, **dadurch gekennzeichnet, dass** jede maschinenlernbasierte Funktionalität (302A, 302B, 302C) eine Maschinenlernentität (304A, 304B, 304C) und mindestens einen Maschinenlernmodus (306A, 306B, 306C, 306D, 306E), der mit der Maschinenlernentität (304A, 304B, 304C) verknüpft ist, umfasst; und
Empfangen einer Aktivierungsanforderung vom Benutzerknoten (200), um mindestens eine maschinenlernbasierte Funktionalität (302A, 302B, 302C) aus den maschinenlernbasierten Funktionalitäten (302A, 302B, 302C) zu aktivieren.

13. Benutzerknoten (200), der Mittel zum Durchführen von Folgendem umfasst:
Identifizieren von Benutzerknotenfähigkeiten, die eine maschinenlernbasierte Assistenzfähigkeit (300) umfassen, wobei die maschinenlernbasierte Assistenzfähigkeit (300) maschinenlernbasierte Funktionalitäten (302A, 302B, 302C) umfasst, **dadurch gekennzeichnet, dass** jede maschinenlernbasierte Funktionalität (302A, 302B, 302C) eine Maschinenlernentität und mindestens einen Maschinenlernmodus (306A, 306B, 306C, 306D, 306E), der mit der Maschinenlernentität verknüpft ist, umfasst; und
Veranlassen einer Übertragung der Benutzerknotenfähigkeiten zu einem Netzwerkknoten (100) auf einer Funkzugangsnetzwerk(RAN)-Seite; und
Empfangen einer Aktivierungsanforderung vom Netzwerkknoten (100), um mindestens eine maschinenlernbasierte Funktionalität (302A, 302B, 302C) aus den maschinenlernbasierten Funktionalitäten (302A, 302B, 302C) zu aktivieren.

14. Benutzerknoten (200), der Mittel zum Durchführen von Folgendem umfasst:
Identifizieren von Benutzerknotenfähigkeiten, die eine maschinenlernbasierte Assistenzfähigkeit (300) umfassen, wobei die maschinenlernbasierte Assistenzfähigkeit (300) maschinenlernbasierte Funktionalitäten (302A, 302B, 302C) umfasst, **dadurch gekennzeichnet, dass** jede maschinenlernbasierte Funktionalität (302A, 302B, 302C) eine Maschinenlernentität und mindestens einen Maschinenlernmodus (306A, 306B, 306C, 306D, 306E), der mit der Maschinenlernentität verknüpft ist, umfasst;
Veranlassen einer Übertragung der Benutzerknotenfähigkeiten zu einem Netzwerkknoten (100) auf einer Funkzugangsnetzwerk(RAN)-Seite; und
Veranlassen einer Übertragung einer Aktivierungsanforderung zum Netzwerkknoten (100), um mindestens eine maschinenlernbasierte Funktionalität (302A, 302B, 302C) aus den maschinenlernbasierten Funktionalitäten (302A, 302B, 302C) zu aktivieren.

15. Computerlesbares Medium, das ein Computerprogramm umfasst, das Anweisungen zum Veranlassen einer Einrichtung, das Verfahren nach einem der Ansprüche 1 bis 10 durchzuführen, umfasst.

## Revendications

1. Procédé comprenant l'étape suivante :
sur un côté réseau d'accès radio, RAN, recevoir d'un nœud utilisateur (200), au niveau d'un nœud de réseau (100), des capacités de nœud utilisateur comprenant une capacité d'assistance basée sur l'apprentissage machine (300), la capacité d'assistance basée sur l'apprentissage machine (300) comprenant des fonctionnalités basées sur l'apprentissage machine (302A, 302B, 302C), **caractérisé en ce que**
chaque fonctionnalité basée sur l'apprentissage machine (302A, 302B, 302C) comprend une entité d'apprentissage machine (304A, 304B, 304C) et au moins un mode d'apprentissage machine (306A, 306B, 306C, 306D, 306E) associé à l'entité d'apprentissage machine (304A, 304B, 304C),
le procédé comprenant en outre les étapes suivantes :
sélectionner au moins une fonctionnalité basée sur l'apprentissage machine (302A, 302B, 302C) dans les fonctionnalités basées sur l'apprentissage machine (302A, 302B, 302C) ; et
provoquer une transmission au nœud utilisateur (200) d'une demande d'activation pour activer l'au moins une fonctionnalité basée sur l'apprentissage machine (302A, 302B, 302C) sélectionnée.

2. Procédé selon la revendication 1, comprenant en outre l'étape suivante :
recevoir du nœud utilisateur (200) une réponse de demande d'activation, la réponse de demande d'activation comprenant une indication précisant si l'au moins une fonctionnalité basée sur l'apprentissage machine (302A, 302B, 302C) est activée.

3. Procédé comprenant l'étape suivante :
sur un côté réseau d'accès radio, RAN, recevoir d'un nœud utilisateur (200), au niveau d'un nœud de réseau (100), des capacités de nœud utilisateur comprenant une capacité d'assistance basée sur l'apprentissage machine (300), la capacité d'assistance basée sur l'apprentissage machine (300) comprenant des fonctionnalités basées sur l'apprentissage machine (302A, 302B, 302C), **caractérisé en ce que**
chaque fonctionnalité basée sur l'apprentissage machine (302A, 302B, 302C) comprend une entité d'apprentissage machine (304A, 304B, 304C) et au moins un mode d'apprentissage machine (306A, 306B, 306C, 306D, 306E) associé à l'entité d'apprentissage machine (304A, 304B, 304C),
le procédé comprenant en outre l'étape suivante :
recevoir du nœud utilisateur (200) une demande d'activation pour activer au moins une fonctionnalité basée sur l'apprentissage machine (302A, 302B, 302C) dans les fonctionnalités basées sur l'apprentissage machine (302A, 302B, 302C).

4. Procédé selon la revendication 3, comprenant en outre l'étape suivante :
provoquer une transmission au nœud utilisateur (200) d'une réponse d'activation de fonctionnalité basée sur l'apprentissage machine.

5. Procédé selon l'une des revendications 1 à 4, comprenant en outre l'étape suivante :
recevoir du nœud utilisateur (200) une demande de modification (434) pour modifier au moins une fonctionnalité basée sur l'apprentissage machine (302A, 302B, 302C) activée des fonctionnalités basées sur l'apprentissage machine (302A, 302B, 302C).

6. Procédé selon la revendication 5, dans lequel la demande de modification (434) comprend une indication de cause de la modification, l'indication de cause comprenant l'une des indications suivantes :
une indication de désactivation pour désactiver la fonctionnalité basée sur l'apprentissage machine (302A, 302B, 302C) ;
une indication de commutation pour passer à une autre fonctionnalité basée sur l'apprentissage machine (302A, 302B, 302C) ;
une indication de pause pour mettre en pause la fonctionnalité basée sur l'apprentissage machine (302A, 302B, 302C) pendant une période définie ; et
une indication de réinitialisation pour réinitialiser ou redémarrer la fonctionnalité basée sur l'apprentissage machine (302A, 302B, 302C).

7. Procédé comprenant les étapes suivantes :
identifier, au niveau d'un nœud utilisateur (200), des capacités de nœud utilisateur comprenant une capacité d'assistance basée sur l'apprentissage machine (300), la capacité d'assistance basée sur l'apprentissage machine (300) comprenant des fonctionnalités basées sur l'apprentissage machine (302A, 302B, 302C), **caractérisé en ce que**
chaque fonctionnalité basée sur l'apprentissage machine (302A, 302B, 302C) comprend une entité d'apprentissage machine (304A, 304B, 304C) et au moins un mode d'apprentissage machine (306A, 306B, 306C, 306D, 306E) associé à l'entité d'apprentissage machine (304A, 304B, 304C) ; et
provoquer une transmission à un nœud de réseau (100) des capacités de nœud utilisateur sur un côté réseau d'accès radio, RAN,
le procédé comprenant en outre l'étape suivante :
recevoir du nœud de réseau (100) une demande d'activation pour activer au moins une fonctionnalité basée sur l'apprentissage machine (302A, 302B, 302C) dans les fonctionnalités basées sur l'apprentissage machine (302A, 302B, 302C).

8. Procédé selon la revendication 7, comprenant en outre l'étape suivante :
provoquer une transmission au nœud de réseau (100) d'une réponse de demande d'activation, la réponse de demande d'activation comprenant une indication précisant si l'au moins une fonctionnalité basée sur l'apprentissage machine (302A, 302B, 302C) est activée.

9. Procédé comprenant les étapes suivantes :
identifier, au niveau d'un nœud utilisateur (200), des capacités de nœud utilisateur comprenant une capacité d'assistance basée sur l'apprentissage machine (300), la capacité d'assistance basée sur l'apprentissage machine (300) comprenant des fonctionnalités basées sur l'apprentissage machine (302A, 302B, 302C), **caractérisé en ce que**
chaque fonctionnalité basée sur l'apprentissage machine (302A, 302B, 302C) comprend une entité d'apprentissage machine (304A, 304B, 304C) et au moins un mode d'apprentissage machine (306A, 306B, 306C, 306D, 306E) associé à l'entité d'apprentissage machine (304A, 304B, 304C) ; et
provoquer une transmission à un nœud de réseau (100) des capacités de nœud utilisateur sur un côté réseau d'accès radio, RAN,
le procédé comprenant en outre l'étape suivante :
provoquer une transmission au nœud de réseau (100) d'une demande d'activation pour activer au moins une fonctionnalité basée sur l'apprentissage machine (302A, 302B, 302C) dans les fonctionnalités basées sur l'apprentissage machine (302A, 302B, 302C).

10. Procédé selon la revendication 9, comprenant en outre le fait de recevoir du nœud de réseau (100) une réponse d'activation de fonctionnalité basée sur l'apprentissage.

11. Nœud de réseau (100) comprenant des moyens pour réaliser ce qui suit :
sur un côté réseau d'accès radio, RAN, le nœud de réseau (100),
reçoit d'un nœud utilisateur (200) des capacités de nœud utilisateur comprenant une capacité d'assistance basée sur l'apprentissage machine (300), la capacité d'assistance basée sur l'apprentissage machine (300) comprenant des fonctionnalités basées sur l'apprentissage machine (302A, 302B, 302C), **caractérisé en ce que**
chaque fonctionnalité basée sur l'apprentissage machine (302A, 302B, 302C) comprend une entité d'apprentissage machine (304A, 304B, 304C) et au moins un mode d'apprentissage machine (306A, 306B, 306C, 306D, 306E) associé à l'entité d'apprentissage machine (304A, 304B, 304C),
sélectionne au moins une fonctionnalité basée sur l'apprentissage machine (302A, 302B, 302C) dans les fonctionnalités basées sur l'apprentissage machine (302A, 302B, 302C) ; et
provoque une transmission au nœud utilisateur (200) d'une demande d'activation pour activer l'au moins une fonctionnalité basée sur l'apprentissage machine (302A, 302B, 302C) sélectionnée.

12. Nœud de réseau (100) comprenant des moyens pour réaliser ce qui suit :
sur un côté réseau d'accès radio, RAN, le nœud de réseau (100),
reçoit d'un nœud utilisateur (200) des capacités de nœud utilisateur comprenant une capacité d'assistance basée sur l'apprentissage machine (300), la capacité d'assistance basée sur l'apprentissage machine (300) comprenant des fonctionnalités basées sur l'apprentissage machine (302A, 302B, 302C), **caractérisé en ce que**
chaque fonctionnalité basée sur l'apprentissage machine (302A, 302B, 302C) comprend une entité d'apprentissage machine (304A, 304B, 304C) et au moins un mode d'apprentissage machine (306A, 306B, 306C, 306D, 306E) associé à l'entité d'apprentissage machine (304A, 304B, 304C) ; et
reçoit du nœud utilisateur (200) une demande d'activation pour activer au moins une fonctionnalité basée sur l'apprentissage machine (302A, 302B, 302C) dans les fonctionnalités basées sur l'apprentissage machine (302A, 302B, 302C).

13. Nœud utilisateur (200) comprenant des moyens pour réaliser ce qui suit :
identifier des capacités de nœud utilisateur comprenant une capacité d'assistance basée sur l'apprentissage machine (300), la capacité d'assistance basée sur l'apprentissage machine (300) comprenant des fonctionnalités basées sur l'apprentissage machine (302A, 302B, 302C), **caractérisé en ce que**
chaque fonctionnalité basée sur l'apprentissage machine (302A, 302B, 302C) comprend une entité d'apprentissage machine et au moins un mode d'apprentissage machine (306A, 306B, 306C, 306D, 306E) associé à l'entité d'apprentissage machine ; et
provoquer une transmission à un nœud de réseau (100) des capacités de nœud utilisateur sur un côté réseau d'accès radio, RAN ; et
recevoir du nœud de réseau (100) une demande d'activation pour activer au moins une fonctionnalité basée sur l'apprentissage machine (302A, 302B, 302C) dans les fonctionnalités basées sur l'apprentissage machine (302A, 302B, 302C).

14. Nœud utilisateur (200) comprenant des moyens pour réaliser ce qui suit :
identifier des capacités de nœud utilisateur comprenant une capacité d'assistance basée sur l'apprentissage machine (300), la capacité d'assistance basée sur l'apprentissage machine (300) comprenant des fonctionnalités basées sur l'apprentissage machine (302A, 302B, 302C), **caractérisé en ce que**
chaque fonctionnalité basée sur l'apprentissage machine (302A, 302B, 302C) comprend une entité d'apprentissage machine et au moins un mode d'apprentissage machine (306A, 306B, 306C, 306D, 306E) associé à l'entité d'apprentissage machine ;
provoquer une transmission à un nœud de réseau (100) des capacités de nœud utilisateur sur un côté réseau d'accès radio, RAN ; et
provoquer une transmission au nœud de réseau (100) d'une demande d'activation pour activer au moins une fonctionnalité basée sur l'apprentissage machine (302A, 302B, 302C) dans les fonctionnalités basées sur l'apprentissage machine (302A, 302B, 302C).

15. Support lisible par ordinateur comprenant un programme informatique comprenant des instructions pour amener un appareil à réaliser le procédé de l'une des revendications 1 à 10.
